Europäisches Patentamt

European Patent Office

Office européen des brevets

(11) Publication number: **0 121 299**
**B1**

(12) # EUROPEAN PATENT SPECIFICATION

(45) Date of publication of patent specification: **10.10.90**

(21) Application number: **84300640.4**

(22) Date of filing: **01.02.84**

(51) Int. Cl.⁵: **D 04 H 1/00, A 41 D 13/00**

(54) Molded nonwoven shaped articles.

(30) Priority: **01.02.83 US 462927**

(43) Date of publication of application:
**10.10.84 Bulletin 84/41**

(45) Publication of the grant of the patent:
**10.10.90 Bulletin 90/41**

(84) Designated Contracting States:
**DE FR GB IT**

(56) References cited:
**DE-A-3 007 343**
**US-A-3 220 409**
**US-A-3 333 585**
**US-A-3 499 810**
**US-A-4 195 112**

(73) Proprietor: **MINNESOTA MINING AND**
**MANUFACTURING COMPANY**
**3M Center, P.O. Box 33427**
**St. Paul Minnesota 55133 (US)**

(72) Inventor: **Berg, Harvey J. c/o Minnesota Mining**
**and Manufacturing Company 2501 Hudson Road**
**P.O. Box 33427 St. Paul Minnesota 55133 (US)**
Inventor: **Krankkala, George E. c/o Minnesota**
**Mining**
**and Manufacturing Company 2501 Hudson Road**
**P.O. Box 33427 St. Paul Minnesota 55133 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

### Background of the invention

The present invention relates to molded or shaped porous nonwoven fabric articles which are particularly well suited for use as breath filtering industrial and medical face masks. It has noteworthy value in other shaped porous nonwoven articles as diverse as seedling planting containers and filter holding shells.

The desirability of shaping or molding nonwoven webs to a dimensionally predictable and suitably stable form is well known in the art. Thus, see U.S. Patent Nos. 2,609,539, 3,064,329, 3,333,585, and 4,195,112 and Canadian Patent 728,462. These patents illustrate the interest and concern that has existed for many years as well as the methods of shaping fibrous structures by using heat and pressure.

Shaped nonwoven products formed from either bonded fabrics or unbonded webs have achieved wide usage in commerce. They provide the desired form and suitable performance for their intended applications at relatively low cost.

U.S. Patent 2,609,539 involves the steps of shaping the web material on the surface of a mold, heating the material to a bonding temperature, cooling the material and then removing the shaped article from the mold. U.S. patent 3,064,329 is directed to a process in which the shaped and bonded article was promptly removed from the mold without a cooling step but it was necessary to coat and further interbond the fibers with a latex binder to provide a useful article of commerce. U.S. Patent 3,333,585 discloses a molded cold weather mask made following the general procedures of U.S. Patent 3,064,329, the mask being impregnated after molding with an aqueous dispersion of a hypo-allergenic rubbery acrylic polymer textile sizing latex to coat the fibers and interbond them at their crossing points.

U.S. Patent 4,195,112 describes a process for molding a coherent, pliable, thermally bonded nonwoven fabric and involves the steps of shaping and pressing the bonded fabric on a mold, heating to develop new or stronger thermal bonds, cooling the fabric to retain its shape and then removing the shaped fabric from the mold. The fabric to be molded may be a single fabric, or it may be part of a fabric assembly formed by stitching or similarly bonding two or more fabrics together. The fabrics may be formed from continuous filaments or staple fibers. At least 20% of the fibers are of the potentially adhesive type, by which term it is meant that the fibers comprise at least two fiber forming, polymeric components extending along the length of the fiber, one of the components having a lower softening temperature than the other component(s) and forming at least part of the peripheral surface of the fiber.

Canadian Patent 728,462 is directed to a filter-type face mask in which the fibers of the filter membrane are coated and unified after molding with a rubber water-insoluble fiber-binding sizing agent.

### Summary of the invention

The present invention provides a useful process for making articles of commerce, particularly suitable for example for making breath filtering industrial and medical face masks, by shaping and pressing unbonded fibers on a heated mold with prompt removal of the shaped article from the heated mold and without subsequent coating and interbonding of the fibers with a binding polymeric resin.

This new process for making such articles is defined in the accompanying Claim 1.

Breath filtering face masks must have the properties of low resistance to breathing, of being comfortable to the skin of the face, of being free of unbonded fibers, of having adequate filtration properties, and of being stiff enough to resist the effects of moisture and inhalation resistance.

The stiffness of shaped fabric articles such as face masks is measured in terms of the force (pounds) required to push a 1 inch (2.54 cm) diameter flat-faced probe 1.25 inch (3.18 cm) into the shaped article with motion from the outside of the article and perpendicular to the base of the article. The equipment used is a King Fabric Stiffness Tester Model GFC10A with digital Chatillon force gauge, modified by the addition of a suitable platform to provide repeatable spatial location of the base of the shaped article. Downstroke speed is critical to test repeatability. Flow controllers and pressure regulators are set so that the Chatillon probe crosses a 2.0 inch (5.08 cm) gap in the center of its stroke in a time of 1.13 seconds to 1.14 seconds.

The pressure drop of the face mask is measured in millimeters of water pressure by passing 32 lpm of air through the mask. The pressure drop is measured either with a Dwyer Model M-171 (0—6 mm water) Manometer or a Dwyer Model 424 (0—130 mm water) Manometer. Suitable chucks are used to hold the mask tightly about the periphery so that an airtight seal is accomplished. Molded nonwoven masks with pressure drops up to 15 mm meet user expectations for ease of breathing, but lower pressure drops are desirable. For example, commercial face masks made according to U.S. Patent 3,064,329 have a minimum stiffness of 0.55 pounds (0.249 kg), a maximum pressure drop of 2.3 mm of water and meet the other criteria of an acceptable face mask.

### Brief description of the drawings

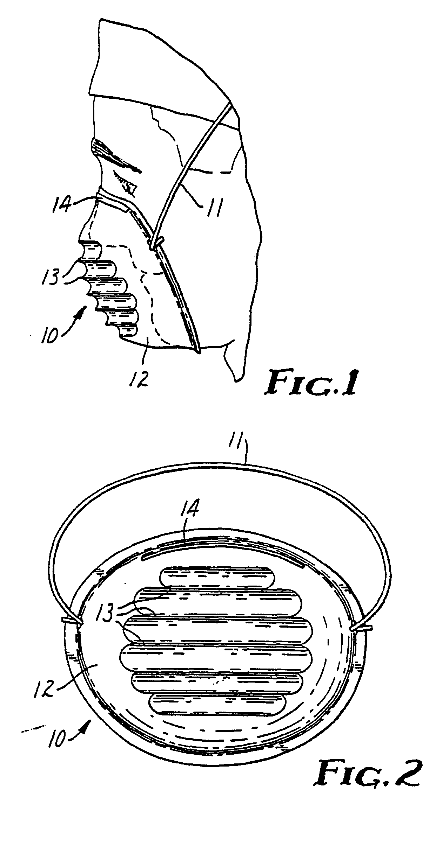

Figure 1 is a side elevation showing a cupped-shaped mask as worn upon a face; and

Figure 2 is a frontal view of the mask of Figure 1.

### Detailed description of the invention

Referring now more particularly to the drawings, it will be seen that the cupped-shaped mask 10 when

2

worn on the face makes a snug low-pressure marginal contact between fabric and skin and conforms to the face so as to extend over the bridge of the nose, under the eyes, over the cheeks and under the chin. The margin of the mask is flared to meet the face at a comfortable acute angle which provides a sealing relationship. The mask is held in place by a light elastic head band 11. The cupped-shaped body 12 of the mask comprises a thin porous fabric which is sufficiently stiff but flexible and springy so as to be comfortable and yet retain its shape and avoid collapse during inhalation. The body may be provided with several horizontal corrugations or ribs 13 across the front to further stiffen and increase resistance to collapse. A thin pliable strip 14 of aluminum is provided at the top edge of the mask to further assist in conforming the mask to the nose of the wearer by pinching the strip 14 to the contour of the nose bridge. As shown by the dashed-line facial profile, the mask stands out from the face and does not touch the tip of the nose, the mouth or the chin and it permits adequate jaw movement for comfortable speaking and breathing.

The following steps are employed in fabricating the porous shaped fabric articles of this invention such as face masks.

1. A dry fluffy fibrous web or batt is formed from one or a mixture of fibers by carding or by a standard air layering process such as with a "Rando Webber" machine sold by Rando Machine Corporation, Macedon, New York. When one type of fiber is used, the fibers are precoated and where a mixture of fibers is used, at least one type of those fibers is precoated, the coating having a significantly lower softening temperature than its concomitant base fiber. The resulting coherent but unbonded web or batt is a collection of fibers interlaced into a loose fluffy web wherein the fibers cross over and under each other so as to be held together in three dimensions by mechanical and frictional forces.

2. A dry fluffy sheet of suitable size is cut from the aforesaid air laid nonwoven web and is fitted over a heated male mold having the desired contour. A male mold of rigid silicone heated by conductive electric heating is preferred. The surface temperature of the male mold is sufficient to soften the coating of the coated fibers. The fluffty sheet is rapidly conformed (as by hand smoothing) to an unwrinkled approximate fit, the fibers being able to shift about to make this possible without wrinkling or impairing the uniformity of the web and without stretching the fibers.

3. A heated, Teflon-coated female mold of cast aluminum and of complementary contour to the male mold is promptly brought against the web-covered male mold so that a relatively uniform soft pressing action is exerted on the intervening web. The surface temperature of the female mold is sufficient to soften the coating of the coated fibers. This rseults in a final and precise molding of the web to the shape of the mold, the fiber still being able to move in the initial phase of this step; and the web is simultaneously compacted by the soft pressing action. The coating of the coated fibers becomes heated sufficiently by the hot molds to soften and wet the surfaces of compatible fibers at their mutual crossover points. A compatible fiber is one where the contact angle with the softened coating is low enough that surface wetting occurs. The heating and pressing are insufficient to cause mashing or cutting of fibers, and fiber identity is retained.

4. The pressure forcing the molds together is released and the molds are separated. The exposed molded article is grasped about its periphery and lifted from the hot male mold, no intervening cooling being required. The article does not stick to the hot mold and can be easily and bodily lifted away without being distorted. Upon cooling, the resulting article is sufficiently stiff to function as a face mask without the addition of a separate binder system.

It will be apparent that a plurality of molds can be combined into a single production unit to produce porous shaped non-woven articles of the present invention on a mass production basis.

The following examples will more fully illustrate the invention. While the examples are specifically directed to shaped non-woven face masks, it will be apparent that numerous other shaped articles can be produced by following the teachings of the examples.

Example 1

A dry fluffy fibrous web was formed on a Rando Webber utilizing 4 dpf×51 mm all polyester sheathed fibers at a basis weight of 1.662 Pa (100 pounds per ream (320 yd$^2$)). The fiber is believed to comprise a core of polyethylene-terephthalate and a sheath of polyester resin comprising a random copolyester composite of 68% terephthalic acid units and 32% isophthalic acid units polymerized with ethylene glycol, and is available as "Melty Fiber Type 4080" from Unitika, Ltd., Osaka, Japan. The fiber core (base fiber) has a melting temperature of approximately 245°C. The sheath has a sticking temperature of about 110°—120°C, as described below in Example 7.

A dry fluffy fibrous sheet cut to a convenient size from the above formed web was shaped over a heated rigid cupped-shaped silicone male mold maintained at 121°C (250°F), which is above the sticking temperature of the fiber sheath, the loose fibrous state permitting of conformation over the mold.

This shaped fluffy sheet is then promptly subjected to unform soft-pressing by bringing a heated, aluminum female mold of complementary contour to the male mold against the web covered male mold to compact and unify the web to a stable molded shape precisely conforming to the molds. The mask molds are preferably contoured to produce a mask having a cupped-shaped body portion having an area in the range of 161—174 cm$^2$ (25 to 27 square inches). The molds may be ribbed or corrugated to further strengthen and stiffen the cupped-shaped masks. The molding time is about six seconds at a temperature of about 250°F and a pressure of about 97.5 kg (215 pounds) applied over a projected area of 231 cm² (35.75 square inches).

The stiffness of the molded mask was 0.53 kg (1.71 pounds), measured on the King Fabric Stiffness Tester.

The air pressure drop of the molded mask, measured by the Dwyer Manometer, was 0.6 mm of water.

Example 2

A dry fluffy fibrous web was formed according to the procedure set forth in Example 1 with 50% by weight of "Melty Fiber Type 4080" and 50% by weight of polyester staple fibers, 6 dpf×5.08 cm (2 inch), Type 476, Finish 75, semi-dull, crimped (Celanese Fiber Industries, Inc., Salisbury, N.C.), at a basis weight of 1.662 Pa (100 pounds per ream). The melting point of the Celanese polyester staple fiber is approximately 245°C. The web was molded as set forth in Example 1 and produced a molded mask having a stiffness value of 0.41 kg (0.91 pounds) on the King Fabric Stiffness Tester and an air pressure drop of 0.35 mm of water.

Example 3

A dry fluffy fibrous web was formed according to the procedure set forth in Example 1 with 75% by weight of "Melty Fiber Type 4080" and 25% by weight of polyester staple fibers, 6 dpf×5.08 cm (2 inch), Type 476, Finish 75, semi-dull, crimped (Celanese), at a basis weight of 1.080 Pa (65 pounds per ream). The web was molded as set forth in Example 1 and produced a molded mask having a stiffness value of 0.09 kg (0.20 pounds) on the King Fabric Stiffness Tester and an air pressure drop of 0.2 mm of water. Surprisingly, this molded shaped with a stiffness value as low as 0.09 kg (0.20 lbs) showed adequate efficacy as a face mask.

Example 4

A dry fluffy fibrous web was formed according to the procedure set forth in Example 1 with 75% by weight of "Melty Fiber Type 4080" and 25% by weight of electrically charged fibrillated isotactic polypropylene fibers, about 40×10 microns in cross section×38 mm length, "Filtrete Type G" (3M Company, St. Paul, MN) at a basis weight of 1.662 Pa (100 pounds per ream). The melting point of the Filtrete Type G fibers is approximately 165°C. The web was molded as set forth in Example 1 and produced a molded mask having a stiffness value of 0.51 kg (1.12 pounds) on the King Fabric Stiffness Tester and an air pressure drop of 0.75 mm of water.

Example 5

A dry fluffy fibrous web was formed according to the procedure set forth in Example 1 with 50% by weight of "Melty Fiber Type 4080" and 50% by weight of viscose rayon fiber, 3 dpf×5.08 cm (2 inch), (American Enka Company, Des Plaines, IL) at a basis weight of 1.662 Pa (100 pounds per ream). The web was molded as set forth in Example 1 and produced a molded mask having a stiffness value of 0.31 kg (0.68 pounds) on the King Fabric Stiffness Tester and an air pressure drop of 0.45 mm of water.

Example 6

A dry fluffy fibrous web was formed according to the procedure set forth in Example 1 with 50% by weight of "Melty Fiber Type 4080" and 50% by weight of wood pulp fiber, average fiber length of 2.2 mm, Rayfluff-X-Q (ITT Rayonier Inc., New York, NY) at a basis weight of 1.662 Pa (100 pounds per ream). The web was molded as set forth in Example 1 and produced a molded mask having a stiffness value of 0.28 kg (0.62 pounds) on the King Fabric Stiffness Tester and an air pressure drop of 0.6 mm of water.

Examples 1 through 6 show that a precoated textile type fiber, such as "Melty Fiber Type 4080" by itself or blended at a suitable ratio with other type fibers, such as specified in Examples 2 through 6, can be formed into a nonwoven web and molded to form an article which is sufficiently stiff, free of fuzz, and comfortable to the face so as to function as a face mask without the subsequent addition of a separate polymeric resin binder system to impart stiffness.

It was observed that webs comprised entirely or partially of Melty Fiber Type 4080, similar to those discussed in Examples 1 to 6, stuck to the molds when the molding temperature was about 300°F or higher. To insure proper molding, it is necessary that the molding temperature be above the sticking temperature of the polymer coating but below the softening point of the base fiber so that the fibrous nature of the molded article is maintained. However, it is believed that as the molding temperature approaches the temperature range where the melt flow of the coating is significant, sticking of the molded article to the mold surface can occur.

Examples 7—13

A dry, fluffy fibrous web was made utilizing polyester staple fibers, 6 dpf×5.08 cm (2 inch) of Example 2 (Celanese) by the method described in Example 1. The basis weight of the web was 1.463 Pa (88 pounds per ream). A 25% solids solution of Vitel PE-200 (amorphous non-crystallizable copolyester manufactured by Goodyear) in methyl ethyl ketone and toluene was squeeze roll coated onto the polyester web. After drying, the web was reweighed and showed that 0.532 Pa (32 pounds per ream) of the amorphous copolyester was deposited on the fibers of the web.

The coated web, which was now highly compacted and with the fibers tightly bonded together, was "reopened", using conventional means, such as the lickerin portion of a Rando Webber, and formed into a lofty fibrous web. This lofty fibrous web was molded following the procedure of Example 1 to yield a face mask which was sufficiently rigid without the use of a separate binder system.

The same procedure was repeated using other base fibers and polymeric coatings whose physical properties are summarized in Table I.

The polymeric coatings are characterized by the temperature at which they stick to stainless steel. The sticking temperature is the temperature at which the polymeric coating begins to adhere to the stainless steel top of a Kofler hot bench. At this temperature the polymeric coating also adheres to itself under the pressure of molding.

TABLE I

| Ex. No. | Base fiber | Polymer coating | Sticking temp. °C (range) | Mold temp. °C | Wt. ratio coating:fiber | Stiffness (lbs) | Pressure drop (mmH$_2$O) |
|---|---|---|---|---|---|---|---|
| 7 | Polyester 6.0 dpf× 5.08 cm (2 in) (Celanese) m.p. 245°C | Vitel PE-200 copolyester (Goodyear) | 110—120 | 120 | 36/100 | (2.10) 0.95 kg | 0.9 |
| 8 | Polyester | Elvace 1974 ethylene-vinylacetate (Dupont) | 90—100 | 120 | 16/100 | (.88) 0.4 kg | 0.5 |
| 9 | Polyester | Geon 580X158 vinyl chloride (Goodrich) | 140—160 | 190 | 28/100 | (.88) 0.4 kg | 0.3 |
| 10 | Polyester | Hycar 26084 acrylic (Goodyear) coated at pH 8—9 | 110—120 | 190 | 42/100 | (1.08) 0.5 kg | 1.4 |
| 11 | Rayon 3.0 dpf× 5.08 cm (2 in) (American Enka) does not melt, discolors at 230°C | Elvace 1874 | 90—100 | 120 | 13/100 | (1.01) 0.46 kg | 1.03 |
| 12 | Rayon | Vitel PE-200 | 110—120 | 120 | 27/100 | (2.02) 0.92 kg | 1.0 |
| 13 | Rayon | Geon 580X158 | 140—160 | 190 | 23/100 | (.96) 0.44 kg | 1.1 |

EP 0 121 299 B1

The data from Examples 7 to 13 show that molded shapes with adequate stiffness, free of fuzz, and comfortable to the face can be made from solution or emulsion coated fibers provided that the molding temperature is above the sticking temperature of the coating (Table I) and below the softening temperature of the concomitant base fiber. It is contemplated that the coated fibers of Examples 7 to 13 can be blended with other fibers as in Examples 2 through 6 to form suitable molded shapes.

In an effort to determine whether shaped nonwoven products could be produced by utilizing the components in a form other than a base fiber with a coating in intimate association with the base fiber, the following experiment was carried out. Melt blown fibers were produced from a polyester resin comprising a random copolyester composite of 80% terephthalic acid units and 20% isophthalic acid units polymerized with ethylene glycol. In the melt blown fiber process, the polymer is converted into nonwoven webs directly from the melt by extruding, attenuating, cooling, and collecting fibers on a moving belt in a rapid continuous fashion generally as taught in U.S. patent 3,971,373. The attenuation and cooling are done with airstreams acting at the point of extrusion. These fibers showed a melting point of 160°C. The melt blown polyester nonwoven web was subsequently "opened" and mixed with 50% by weight of polyester staple fiber, 6 dpf×5.08 cm (2 inch) of Example 2 (Celanese). The fiber mixture was used to produce an air laid nonwoven web as described above in Examples 2—6 at a basis weight of 1.662 Pa (100 pounds per ream). The web was molded as set forth in Example 1 for six seconds at a temperature of about 250°F and a force of about 97.5 kg (215 pounds) over a projected area of 231 cm² (35.75 sq. in). The molded form stuck to the mold and was deformed in removal from the mold. While the stiffness of the molded form was 0.16 kg (0.35 pounds), the surface of the molded form was rough and fuzzy, uncomfortable during wearing and would require at least additional interfiber bonding with a polymeric latex to be a useful molded mask. This experiment clearly shows that although a bonding material of substantially the same chemical composition as the sheath of the "Melty Fiber Type 4080" (the melt blown polyester fibers) is utilized, unless the bonding material is present as an intimate coating on the base fiber, a useful product cannot be produced.

## Claims

1. A process for making a shaped porous article useful as a breath filtering mask, comprising the steps of

(a) forming a non-woven fibrous three-dimensional unbonded network from fibers which are dimensionally stable at the shaping conditions, at least a portion of the fibers having a continuous coating of a thermally sensitive bonding resin thereon, and

(b) subjecting said fibrous network to a uniform soft pressing action in a mold at a temperature above the sticking temperature of the coating and below the softening temperature of the base fiber, such that said fibrous network is thermally bonded solely by said coating mainly at the crossing points of the fibers.

2. A process for making a porous article according to claim 1 wherein said fibers comprise polyester sheathed fibers comprising a core of polyethylene terephthalate and a sheath of a random copolyester composite of terephthalic acid units and isophthalic acid units.

3. A process for making a porous article according to either of claims 1 and 2 wherein said nonwoven fibrous three dimensional network is formed from a mixture of two types of fibers, at least one of said types of fibers having a continuous coating of a thermally sensitive bonding resin thereon.

4. A process for making a porous article according to any one of claims 1 to 3 additionally including one or more of polyester staple fibers, electrically charged fibrillated isotactic polypropylene fibers, viscose rayon fibers, wood pulp fibers.

5. A process for making a porous article according to any one of claims 1 to 4 wherein said continuous coating of thermally sensitive bonding resin on said fibers has been applied from a liquid.

6. A process for making a porous article according to any one of claims 1 to 5 wherein said fiber is polyester and said thermally sensitive bonding resin is selected from ethylene-vinylacetate, amorphous polyester, plasticized polyvinyl chloride or acrylic.

7. A process for making a porous article according to any one of claims 1 to 6 wherein said fiber is rayon and said thermally sensitive bonding resin is selected from ethylene-vinylacetate, amorphous polyester or polyvinyl chloride.

## Patentansprüche

1. Verfahren zum Herstellen eines geformten porösen Gegenstandes, der als Atemfiltermaske verwendbar ist, mit folgenden Schritten:

(a) ein räumliches ungebundenes Netzwerk aus nichtgewebten Fasern wird aus Fasern hergestellt, die unter den Verformungsbedingungen maßhaltig sind und die mindestens zum Teil mit einem geschlossenen Überzug aus einem temperaturempfindlichen Bindeharz versehen sind, und

(b) das Netzwerk aus Fasern wird in einer Form bei einer Temperatur, die über der Verklebungstemperatur des Überzuges und unter der Erweichungstemperatur der Kernfaser liegt, einer einheitlichen weichpressenden Einwirkung unterworfen, so daß das Netzwerk aus Fasern nur mittels des Überzuges vorwiegend an den Kreuzungsstellen der Fasern thermisch gebunden wird.

2. Verfahren zum Herstellen eines porösen Gegenstandes nach Anspruch 1, dadurch gekennzeichnet, daß die Fasern wenigstens teilweise aus polyesterummantelten Fasern bestehen, die einen Kern aus Polyethylenterephthalat und einen Mantel aus einem Verbundstoff in Form eines statistischen Copolyesters aus Terephthalsäureeinheiten und Isophthalsäureeinheiten besitzen.

3. Verfahren zum Herstellen eines porösen Gegenstandes nach Anspruch 1 oder 2, dadurch gekennzeichnet, daß das räumliche Netzwerk aus nichtgewebten Fasern aus einem Gemenge von zwei Arten von Fasern hergestellt wird und auf den Fasern der einen dieser Arten ein geschlossener Überzug aus einem temperaturabhängigen Bindeharz vorgesehen ist.

4. Verfahren zum Herstellen eines porösen Gegenstandes nach einem der Ansprüche 1 bis 3, in dem ferner eine oder mehrere der nachstehenden Substanzen verwendet werden: Polyesterstapelfasern, elektrisch geladene Spaltfasern aus isotaktischem Propylen, Viskosespinnfasern, Holzzellstofffasern.

5. Verfahren zum Herstellen eines porösen Gegenstandes nach einem der Ansprüche 1 bis 4, dadurch gekennzeichnet, daß der auf den Fasern vorgesehene, geschlossene Überzug aus dem temperaturabhängigen Bindeharz aus einer Flüssigkeit aufgetragen worden ist.

6. Verfahren zum Herstellen eines porösen Gegenstandes nach einem der Ansprüche 1 bis 5, dadurch gekennzeichnet, daß die genannten Fasern aus Polyester bestehen und das temperaturabhängige Bindeharz aus Ethylen-Vinylacetat, amorphem Polyester, weichgemachtem Polyvinylchlorid oder Acrylharz ausgewählt ist.

7. Verfahren zum Herstellen eines porösen Gegenstandes nach einem der Ansprüche 1 bis 6, dadurch gekennzeichnet, daß die Fasern aus Rayon bestehen und das temperaturabhängige Bindeharz aus Ethylen-Vinylacetate, amorphem Polyester oder Polyvinylchlorid ausgewählt ist.

**Revendications**

1. Procédé de fabrication d'un article poreux mis en forme, utilisable comme masque respiratoire filtrant, comprenant les étapes consistant à:

(a) former un réseau tridimentionnel fibreux non-tissé non-lié à partir de fibres qui sont dimensionnellement stables dans les conditions de mise en forme, une partie au moins des fibres présentant un revêtement continu d'une résine de liaison thermosensible, et

(b) soumettre ledit réseau fibreux à une faible pression uniforme dans un moule à une température supérieure à la température où le revêtement colle et inférieure à la température de ramollissement des fibres de base, de sorte que le réseau fibreux soit lié thermiquement uniquement par ledit revêtement principalement aux points de croisement des fibres.

2. Procédé de fabrication d'un article poreux selon la revendication 1, dans lequel lesdites fibres comprennent des fibres gainées de polyester comprenant une âme de polyéthylène térephtalate et une gaine d'un composé copolyester aléatoire d'unités acides térephtaliques et d'unités acides isophtaliques.

3. Procédé de fabrication d'un article poreux selon l'une quelconque des revendications 1 ou 2, selon lequel ledit réseau tridimensionnel fibreux non-tissé est formé à partir d'un mélange de deux types de fibres, l'un au moins desdits types de fibres présentant un revêtement de résine de liaison thermosensible.

4. Procédé de fabrication d'un article poreux selon l'une quelconque des revendications 1 à 3, comprenant en outre des fibres artificielles de polyester, des fibres fibrillées de polypropylène isotactique électriquement chargées, des fibres de rayonne viscose, ou des fibres de pulpe de bois, ou plusieurs d'entre elles.

5. Procédé de fabrication d'un article poreux selon l'une quelconque des revendications 1 à 4, dans lequel ledit revêtement continu de résine de liaison thermosensible sur les fibres a été appliqué à partir d'un liquide.

6. Procédé de fabrication d'un article poreux selon l'une quelconque des revendications 1 à 5, dans lequel ladite fibre est en polyester et ladite résine de liaison thermosensible est choisie parmi l'éthylène-acétate de vinyle, le polyester amorphe, le chlorure de polyvinyle plastifié ou l'acrylique.

7. Procédé de fabrication d'un article poreux selon l'une quelconque des revendications 1 à 6, dans lequel ladite fibre est en rayonne et ladite résine de liaison thermosensible est choisie parmi l'éthylène-acétate de vinyle, le polyester amorphe ou le chlorure de polyvinyle.

*FIG.1*

*FIG.2*